# EUROPÄISCHE PATENTANMELDUNG

(11) **EP 0 914 890 A2**
(43) Veröffentlichungstag der Anmeldung: **12.05.1999**
(21) Anmeldenummer: 98119734.6
(22) Anmeldetag: 20.10.1998
(51) Int. Cl.: B22F 3/00, C22C 1/09, C04B 30/02

(54) **Fasern enthaltendes Halbzeug und Verfahren zur Herstellung dieses Halbzeuges**

(30) Priorität: 30.10.1997 DE 19747843; 05.10.1998 DE 19845622
(71) Anmelder: Eberlein, Wolfgang, D-8871 Bubesheim (DE)
(72) Erfinder: Eberlein, Wolfgang, D-8871 Bubesheim (DE)

(57) **Zusammenfassung**

Die Erfindung betrifft ein Halbzeug, das aus metallischen oder keramischen Fasern gebildet ist, wobei die Fasern in eine Matrix eingebettet sind, deren Schmelzpunkt oder Erweichungsbereich niedriger ist als der Schmelzpunkt der Fasern und wobei das Matrixmaterial entweder durch Erwärmen oder durch Auswaschen von den Fasern trennbar ist.

## Beschreibung

Die Erfindung betrifft ein Halbezug und ein Verfahren zur Herstellung dieses Halbzeuges.

Es ist bekannt, metallische und keramische Fasern durch Schmelzextraktion oder durch andere geeignete Verfahren herzustellen. Aus diesen in loser Form vorliegenden Fasern werden zum Beispiel Bauteile durch Sintern hergestellt.

Es hat sich als nachteilig erwiesen,
- dass die Fasern bei ihrer Lagerung brechen und verschmutzen können;
- dass durch Unachtsamkeit ein Vermischen mit Fasern anderer Zusammensetzung erfolgen kann;
- dass sich bei der Handhabung Fasern in der Haut festsetzen können, was zu schmerzhaften Entzündungen führen kann;
- dass sehr kleine Fasern als kanzerogen gelten;
- dass Fasern bei ihrer Lagerung und bei der Herstellung von Bauteilen verloren gehen können, was sich als Unkostenfaktor erweist und
- dass Fasern in unerwünschter Weise oxidieren können.

Es ist Aufgabe der Erfindung, ein geeignetes Halbzeug zu entwickeln und ein Verfahren zur Herstellung dieses Halbzeuges vorzuschlagen, damit nicht nur die genannten Nachteile vermieden werden, sondern dass sich auch Vorteile bei der Herstellung von aus diesem Halbzeug gefertigten Bauteilen ergeben.

Die Erfindung schlägt vor, das Halbzeug aus metallischen oder keramischen Fasern zu bilden, die in eine Matrix eingebettet sind, deren Schmelzpunkt oder Erweichungsbereich niedriger ist als der Schmelzpunkt der Fasern und dass das Matrixmaterial entweder durch Erwärmen oder durch Auswaschen von den Fasern trennbar ist.

Ferner schlägt die Erfindung ein Verfahren vor, bei dem die metallischen oder keramischen Fasern mit dem Matrixmaterial in Kontakt gebracht und die Fasern und das Matrixmaterial durch Erwärmen und anschließendes Erkalten in die Form als Halbzeug übergeführt werden.

Die Erfindung bietet entscheidende Vorteile.
Durch das Einbetten der Fasern in geeignete Matrixwerkstoffe werden die Fasern im Halbzeug gebunden und können nicht mehr brechen, verschmutzen oder oxidieren. Auch ein Vermischen mit anderen Fasern ist ausgeschlossen. Verletzungen werden weitgehend vermieden und Fasern gehen bei der Lagerung des Halbzeuges und bei der Herstellung von Bauteilen aus diesem Halbzeug nicht mehr oder nur in unwesentlichem Maße verloren, so dass auch das Risiko, Kleinste Fasern einzuatmen, minimiert wird. Besonders zweckmäßig ist auch, dass das Matrixmaterial nach einer Trennung von den Fasern in kostengünstiger Weise wiederverwendet werden kann. Ferner erweist es sich als äußerst vorteilhaft, dass das Halbzeug nicht nur problemlos gelagert werden kann, sondern dass es auch in den verschiedensten Formen gestaltbar ist und dass diese Formen bereits an die späteren Formen der herzustellenden Bauteile anpassbar sind. Dadurch lassen sich bei der Herstellung von Bauteilen teure Bearbeitungsvorgänge vermeiden. Schließlich können auch angefallene Abfallstücke des Halbzeugs in zweckmäßiger Weise geeigneten Recyclingprozessen zugeführt werden.

Die DE 43 38 122 A1 beschreibt ein Verfahren zur Herstellung von Sinterformteilen und dafür geeignete Zusammensetzungen. Bei diesem gattungsgemäßen Verfahren wird vorgeschlagen, keramischem und/oder metallischem Pulver ein Bindemittel und einen kohlenstoffliefernden Zusatzstoff beizumischen. Das Entfernen des Bindemittels geschieht durch Behandlung der Sinterformteile mit einer gasförmigen Säure oder Pyrolyse. Dieses Verfahren läßt sich auf die hier vorliegende Erfindung nicht übertragen, da ein kohlenstoffliefernder Zusatsstoff unerwünscht ist, um eine Aufkohlung der metallischen Fasern beim Erhitzen zu vermeiden. Darüberhinaus ist zu befürchten, daß die gasförmige Säure nicht nur die metallischen Fasern, sondern auch die keramischen Fasern in negativer Weise beeinflußt. Außerdem besteht ein großer Unterschied zwischen einem Pulver, bei dem bei einem Sintervorgang geschlossene Porosität auftreten kann und Fasern, bei denen ein Sinterprozeß ausschließlich zu offener Porosität führt.

In der japanischen Patentanmeldung JP 6-33107 A wird ein Verfahren vorgeschlagen, durch das die Schrumpfung von aus metallischem Pulver hergestellten Sinterformteilen minimiert werden soll. Auch dieses gattungsfremde Verfahren läßt sich auf die vorliegende Erfindung nicht übertragen, weil als Bindemittel ein Harz vorgeschlagen wird, das sich beim Erwärmen entweder nur vernetzen oder sich nur zersetzen kann. Eine Trennung des Matrix-materiales von den Fasern durch Erwärmen, wie es die hier vorliegende Erfindung vorschlägt, ist nicht möglich.

Die EP 0 297 151 A1 und die EP 0 299 102 A1 beschreiben Verfahren, wie man Faserfilme oder Fasermatten so herstellen kann, daß die Fasern immer in einer gewünschten, vorbestimmten Richtung angeordnet sind. Diese Verfahren unterscheiden sich von der hier vorliegenden Erfindung dadurch, dass die jeweils als Zusatzmedium vorgeschlagenen Stoffe, wie Tetrachlorkohlenstoff, fluor- und chlorsubstituierte Kohlenwasserstoffe, n-Hexan oder Cyclohexan bei Raumtemperatur flüssig sind. Derartige Stoffe eignen sich nicht als Matrixmaterial im Sinne der hier vorliegenden Erfindung.

Schließlich wird in der EP 0 424 739 B1 ein Verfahren zur Herstellung von Formlingen beschrieben, die aus keramischen und/oder metallischen Fasern bestehen. Das Verfahren schlägt vor, die Formlinge durch Verformen eines die Fasern und ein thermoplastisches Bindemittel enthaltendes Gemisch durch Spritzgießen oder Strangpressen und durch anschließendes Entfernen des Bindemittels zu bilden, wobei als Bindemittel Polyoxymethylen verwendet und dieses nach der Verformung durch Behandeln in einer gasförmigen, säurehaltigen oder in einer gasförmigen, Bortrifluorid enthaltenden Atmosphäre entfernt wird. Bei diesem Verfahren ist als nachteilig zu werten, dass das Entfernen des Bindemittels ausschließlich auf chemischem Wege erfolgt. Dies hat zur Folge, dass das Bindemittel nach dem Entfernen aus den Formlingen nicht mehr erneut verwendbar ist. Ferner ist zu befürchten, dass die keramischen und metallischen Fasern durch die vorgeschlagenen Behandlungsmethoden in schädlicher Weise beeinflußt werden können. Diese Nachteile vermeidet die hier vorliegende Erfindung.

Die Erfindung wird anhand von Ausführungsbeispielen näher erläutert.

Das Halbzeug ist durch metallische oder keramische Fasern gebildet, die in eine Matrix eingebettet sind. Der Schmelzpunkt oder Erweichungsbereich des Matrixmaterials ist niedriger als der Schmelzpunkt der Fasern. Als Matrixmaterial eignen sich Stoffe wie Wachs, Paraffine, Kunstfette, Silikone, Thermoplaste, die sich durch Schmelzen leicht verflüssigen lassen. Als Matrixmaterial eignen sich auch höherwertige Alkohole, die bei Raumtemperatur fest sind und die sich besonders leicht abdampfen lassen. Schließlich sind als Matrixmaterial auch wasserlösliche Polymere verwendbar, die durch einfaches Auswaschen mit Wasser problemlos entfernbar sind. Je nach Eigenschaften der Fasern sind auch Metalle mit niedrigem Schmelzpunkt denkbar. Im Zustand als Halbzeug sind die Fasern vom Matrixmaterial umhüllt. Eine weitere wichtige Eigenschaft des Matrixmaterials besteht darin, dass eine schlechte Benetzung der Fasern durch das Matrixmaterial erfolgt, so dass eine spätere Trennung der Fasern vom Matrixmaterial auf einfachste Weise möglich ist.

Zur Herstellung des Halbzeuges werden verschiedene Verfahren vorgeschlagen. Erste Verfahren bestehen darin, dass das Matrixmaterial z.B. in einer Vorrichtung erhitzt und/oder auf andere geeignete Weise auf die gewünschte Viskosität gebracht wird. Anschließend werden die Fasern dem Matrixmaterial zugegeben. Nach dem Abkühlen oder Verfestigen des Matrixmaterials liegt das Halbzeug gebrauchsfertig vor und kann der Vorrichtung entnommen werden.
Als weiteres Verfahren wird vorgeschlagen, den in einer Vorrichtung befindlichen Fasern das erhitzte Matrixmaterial, z.B. höherwertigen Alkohol zuzugeben und das so entstandene Halbzeug zum Zwecke des Gebrauchs abkühlen zu lassen.
Eine andere Möglichkeit besteht darin, pulver- oder granulatförmiges Matrixmaterial mit den Fasern zu vermischen und anschließend das Matrixmaterial aufzuschmelzen oder mit den Fasern warm zu verpressen. Anschließend erfolgt das Abkühlen, um das Halbzeug zu erhalten. Dieses Verfahren bietet sich zum Beispiel bei der Verwendung von Thermoplasten in gemählener Form an.
Bei der Herstellung eines aus Fasern bestehenden Bauteiles, z.B. eines Filters, wird das erforderliche Materialstück auf geeignete Weise vom Halbzeug abgetrennt. Anschließend erfolgt die Trennung des Matrixmaterials vom Materialstück, beispielsweise durch Erwärmen oder Auswaschen des Materialstücks. Dabei fließt das flüssige Matrixmaterial etwa durch ein Gitter oder dergleichen ab, das sich an der Unterseite einer Form befindet, die zur Aufnahme des Materialstückes bestimmt ist. Übrig bleibt ein aus Fasern bestehendes Werkstück, das durch anschließendes Sintern seine endgültige Form als Bauteil erhält.
Das Halbzeug kann unterschiedlichste Formen und Querschnitte aufweisen. Platten, Stangen, Klötze oder mit wenigstens einem Durchbruch ausgestattete Gebilde sind herstellbar. Mit dem zuerst genannten Verfahren läßt sich ein Halbzeug herstellen, das örtlich getrennte, stufenlos angeordnete, lange und kurze Fasern aufweist (Gradientenwerkstoff). Beim erwähnten Warmverpressen hingegen läßt sich ein Halbzeug herstellen, bei dem lange und kurze Fasern unterschiedlich geschichtet sind.

## Patentansprüche

1. Halbzeug, dadurch **gekennzeichnet,** dass es aus metallischen oder keramischen Fasern gebildet ist, die in eine Matrix eingebettet sind, deren Schmelspunkt oder Erweichungsbereich niedriger ist als der Schmelzpunkt der Fasern und daß das Matrixmaterial entweder durch Erwärmen oder durch Auswaschen von den Fasern trennbar ist.

2. Halbzeug nach Anspruch 1, dadurch **gekennzeichnet,** dass als Matrixmaterial Wachse, Paraffine, Kunstfette, Silikone, thermoplastische Kunststoffe, wasserlösliche Polymere oder Metalle mit niedrigem Schmelzpunkt oder auch höherwertige Alkohole vorgesehen sind, die bei Raumtemperatur fest sind.

3. Halbzeug nach Anspruch 1 oder 2, dadurch **gekennzeichnet,** dass das Matrixmaterial in Bezug zu den Fasern schlechte Benetzungseigenschaften aufweist, um eine leichte Trennung der Fasern vom Matrixmaterial zu ermöglichen.

4. Halbzeug nach einem der Ansprüche 1 bis 3, dadurch **gekennzeichnet,** dass es lange und kurze Fasern aufweist, die örtlich getrennt sind (Gradientenwerkstoff).

5. Halbzeug nach einem der Ansprüche 1 bis 4, dadurch **gekennzeichnet,** dass es lange und kurze Fasern aufweist, die unterschiedlich geschichtet sind.

6. Verfahren zur Herstellung des Halbzeuges nach den Ansprüche 1 bis 5, dadurch **gekennzeichnet,** dass die metallischen oder keramischen Fasern mit dem Matrixmaterial in Kontakt gebracht und die Fasern und das Matrixmaterial durch Erwärmen und anschließendes Erkalten in die Form als Halbzeug übergeführt werden.

7. Verfahren nach Anspruch 6, dadurch **gekennzeichnet,** dass das Matrixmaterial in einer Vorrichtung erhitzt und anschließend die Fasern dem erhitzten Matrixmaterial zugegeben werden.

8. Verfahren nach Anspruch 6, dadurch **gekennzeichnet,** dass den Fasern erhitztes Matrixmaterial zugegeben wird.

9. Verfahren nach Anspruch 6, dadurch **gekennzeichnet,** dass das Matrixmaterial mit den Fasern vermischt und anschließend das Matrixmaterial aufgeschmolzen oder mit den Fasern warm verpresst wird.
